# DEMANDE DE BREVET EUROPEEN

(11) **EP 4 446 201 A1**
(43) Date de publication de la demande: **16.10.2024**
(21) Numéro de dépôt: 23167392.2
(22) Date de dépôt: 11.04.2023
(51) Int. Cl.: B62D 13/04, B62D 6/00

(54) **REMORQUE À ESSIEU AUTO-DIRECTEUR À PILOTAGE AUTONOME**

(71) Demandeur: Etablissements Deves, 07210 Saint-Symphorien-Sous-Chomérac (FR)
(72) Inventeur: DEVES, Marc-André, 07000 SAINT PRIEST (FR)
(74) Mandataire: Yes My Patent

(57) **Abrégé**

Remorque agricole (1) comprenant un châssis (11) et au moins deux essieux (E1,E2), avec au moins un essieu (E1) à roues directrices, la remorque comprenant un système de pilotage d'un angle de direction des roues directrices, appelé premier angle α, le premier angle α étant commandé, via un vérin (3), par une unité de commande (5) embarquée, le système de pilotage comportant un capteur de vitesse de roue (71;72) pour délivrer une vitesse longitudinale (VR) de la remorque, le système de pilotage comprenant un capteur de mouvement de lacet (2) fixé au châssis de la remorque et délivrant une mesure instantanée du mouvement de lacet (θ̇) à l'unité de commande, le premier angle α étant rendu dépendant au moins du mouvement de lacet et de la vitesse longitudinale (VR), et procédé de commande associé.

## Description

L'invention se rapporte aux remorques, notamment aux remorques agricoles, du type comprenant deux essieux avec au moins un essieu à roues directrices. L'invention se rapporte aussi accessoirement aux remorques agricoles équipées d'un système de suspension hydraulique pouvant fournir une fonction de correction d'assiette et de dévers.

D'une manière générale, il existe divers types de remorques agricoles. Les remorques agricoles sont destinées à être accouplées à un tracteur pour être tractées par ce tracteur.

Dans le présent document, il faut comprendre le terme « remorque agricole » couvre tous types de remorques, spécialisées ou multi-rôles/multifonctions, ayant la capacité d'évoluer dans les champs comme sur la route. Sur la route, leur vitesse peut aller jusqu'à 40 Km/h voire 50 Km/h. Les remorques en question peuvent comporter un essieu avant ou non. Les remorques en question peuvent être utilisées à diverses fins : récolte, transport de divers matériels et denrées, terrassements. Les remorques en question peuvent être équipées d'une fonction benne ou d'autres fonctions motorisées.

Dans une exploitation agricole, il est courant de trouver plusieurs tracteurs et plusieurs remorques.

Il existe aussi des coopératives de mise en commun de matériel, et dans ce cas de figure, une remorque peut être amenée à être utilisée par plusieurs exploitants agricoles, chacun ayant un ou plusieurs tracteurs.

Les systèmes d'attelage respectifs des tracteurs et des remorques sont donc adaptés pour une interopérabilité très large entre tracteurs et remorques.

En raison d'une limitation d'un poids maximum à l'essieu ou à la roue, les remorques d'une certaine dimension pouvant être chargées avec plusieurs tonnes de chargement sont de nos jours équipées d'un double essieu voire d'un triple essieu.

Lorsqu'une remorque est équipée de deux ou trois essieux sans roues directrices, les parcours en courbe et virages, au champ et encore plus sur route, impliquent des déformations des pneumatiques ou une dégradation de la chaussée ou les deux en même temps.

II est donc apparu ces dernières années des remorques à multiples essieux, avec des essieux à roues directrices, de manière à ce que les roues soient orientées selon le parcours courbe parcouru par la remorque. Ceci diminue fortement l'usure des pneus et évite les dégradations sur la chaussée ou les chemins parcourus par la remorque.

Les systèmes connus pour piloter l'angle d'orientation des roues directrices font appel à une bielle interposée entre la remorque et le tracteur. Plus précisément, une extrémité de la bielle attachée est au tracteur, à un point désaxé par rapport à l'axe longitudinal médian du tracteur, et l'autre extrémité de la bielle est attachée à un capteur d'angle qui se trouve généralement sur le timon de la remorque. Un exemple d'un tel système est connu du document FR2909632.

Mais, un tel système de bielle et capteur d'angle s'avère défavorable du point de vue de l'interopérabilité des tracteurs et des remorques. Souvent un réglage de la position neutre est nécessaire. Par ailleurs, la bielle entrave l'accès à l'espace qui se trouve entre le tracteur et la remorque, alors que l'opérateur a besoin d'accéder à cet espace par exemple pour brancher et débrancher des conduites hydrauliques ou un connecteur électrique, ou encore pour accoupler ou désaccoupler un cardan de prise de force.

Constatant les défauts ci-dessus mentionnés, certains ont essayé de se passer du système avec la bielle et le capteur d'angle, par exemple comme la solution promue dans le document WO2015010671. Toutefois, les capteurs de proximité qui visent les pneumatiques du tracteur sont soumis à plusieurs aléas. En effet, les crampons du tracteur peuvent être revêtus momentanément d'une couche de terre ou de boue d'un côté plus que de l'autre, ce qui va conduire à piloter une orientation des roues de la remorque de façon totalement erronée. En outre, les conditions opérationnelles habituelles conduisent souvent à une salissure rapide des capteurs de proximité et donc un fonctionnement erroné du système.

Certains ont proposé de remplacer la bielle par des chainettes et des ressorts pour commander le capteur d'angle sur le timon, mais dans ce cas il existe une gêne à l'accès des deux côtés du timon.

Les inventeurs ont donc cherché une autre solution pour implémenter la fonction de pilotage de l'orientation des roues de l'essieu à roues directrices, tout en augmentant l'interopérabilité entre tracteurs et remorques.

A cet effet il est proposé ici une remorque agricole comprenant un châssis et au moins deux essieux (E1,E2), avec au moins un premier essieu (E1) à roues directrices, la remorque comprenant un système de pilotage d'un angle de direction des roues directrices du premier essieu, appelé premier angle α, le premier angle α étant commandé, via un premier vérin (3), par une unité de commande (5) embarquée, le système de pilotage prévoyant la fourniture d'une vitesse longitudinale (VR) de la remorque, en provenance d'au moins un capteur de vitesse et à destination de l'unité de commande (5),
la remorque étant caractérisée en ce que le système de pilotage comprend un capteur de mouvement de lacet (2) fixé à un élément structurel de la remorque et délivrant une mesure instantanée du mouvement de lacet (θ̇) à l'unité de commande, le premier angle α étant rendu dépendant au moins du mouvement de lacet (θ̇) et de la vitesse longitudinale (VR).

Le capteur de mouvement de lacet peut être typiquement un gyroscope ou un gyromètre à un seul axe, ou multi axes, avec au moins un axe actif orienté à l'horizontale.

Grâce aux dispositions présentées ci-dessus, il n'y a plus besoin d'installer un capteur d'angle sur le timon de la remorque, ni une bielle qui relie le tracteur à la remorque. Il n'y a aucune interface à prévoir, pour la fonction de pilotage de l'essieu directeur, entre le tracteur et la remorque. On peut ainsi accoupler n'importe quelle remorque à n'importe quel tracteur sans se préoccuper de la fonction pilotage de l'essieu à roues directrices. Le seul interface entre le tracteur et la remorque qui est mis à contribution est la fourniture de pression hydraulique par le tracteur et accessoirement une fourniture de tension électrique pour alimenter l'unité de commande.

De manière astucieuse, il est prévu d'utiliser la réaction du gyroscope à un petit changement de cap, pour piloter alors l'orientation des roues directrices afin de rejoindre une position angulaire correspondant à ce changement de cap pour la remorque, on peut dire que grâce à la boucle d'asservissement de commande on annule un écart de poursuite.

Il faut donc accepter une petite déformation de pneus ou un petit dérapage pour l'annuler aussi vite que possible.

Il faut remarquer que le temps de réponse doit être très court, il faut réagir instantanément à une petite variation de cap de la remorque. De ce point de vue, il est avantageux d'avoir l'unité de commande à bord de la remorque qui lit directement les signaux en provenance du gyromètre, alors que si l'unité de commande était dans la zone de tracteur, il faudrait qu'elle traverse l'interface ISObus ou autre interface CAN ce qui introduirait des retards préjudiciable. Le système de pilotage autonome local, en circuit court, sur la remorque, permet d'obtenir des temps de réponse suffisamment courts et une réactivité satisfaisante.

Malgré le fait que le l'unité de commande ignore l'angle qui existe entre l'axe de la remorque et l'axe du tracteur, l'unité de commande peut tout de même piloter l'orientation des roues selon les indications qui lui sont fournies par le capteur de mouvement de lacet en temps réel associés aux vitesses de rotation des roues.

De plus, de façon étonnante, le principe énoncé ci-dessus peut fonctionner aussi bien en marche avant qu'en marche arrière.

Le terme « embarqué » dans l'expression « unité de commande électrohydraulique embarquée » signifie que cette unité est à bord de la remorque.

Il faut noter que l'unité de commande est ici une unité de commande électrohydraulique.

Les notations « θ̇ » et « dθ/dt » sont équivalentes, il s'agit de la dérivée temporelle du cap de la remorque, θ étant le cap de l'axe longitudinal de la remorque dans le repère terrestre local.

Par « élément structurel », il faut comprendre le châssis de la remorque ou un autre élément relié rigidement au châssis en marche normale.

Il faut noter que le capteur de vitesse peut être implanté sur la remorque, i.e. au niveau d'une ou plusieurs roues de la remorque, ou bien le capteur de vitesse peut être implanté sur le tracteur.

Selon un aspect, le capteur de mouvement de lacet est un gyromètre comprenant au moins un premier axe d'intérêt, ledit premier axe d'intérêt étant orienté à l'horizontale par rapport au châssis de la remorque, formant ainsi le capteur de mouvement de lacet. Moyennant quoi, dès que la remorque subit une rotation autour de son axe vertical, le gyromètre délivre une tension de sortie proportionnelle à la vitesse de rotation (θ̇ = dθ/dt), cette information permet alors à l'unité de commande d'agir sur le premier angle α en pilotant de façon adaptée le premier vérin.

Selon un aspect, lequel le premier angle α est piloté selon la fonction G, telle que α = G (dθ/dt,VR), G étant telle que pour toute vitesse donnée VRa substantiellement non nulle, G (dθ/dt, VRa) est une fonction monotone sur toute la plage des mouvements de lacet. Autrement dit, la fonction G est soit croissante soit décroissante mais pas un mélange de deux.

Par « fonction monotone », il faut comprendre une fonction où la pente présente un signe constant, ou autrement dit la dérivée par rapport à θ̇ (i.e. dθ/dt) présente un signe constant.

Selon une option, on peut choisir G (dθ/dt, VRa) comme fonction linéaire et obtenir ainsi une commande substantiellement proportionnelle. Dans ce cas de figure, la loi de pilotage est simple, et il n'y a pas besoin de cartographie complexe.

Selon un aspect, la fonction G comprend une zone neutre autour de la vitesse nulle, et dans cette zone neutre, la commande est telle que le premier angle α est conservé intact sans changement, ladite de zone neutre étant définie par un seuil bas VRb, et la zone neutre étant comprise entre -VRb et +VRb.

Selon une option, le seuil bas VRb est compris entre 0,5 Km/h et 1,5 Km/h.

On note que par convention les vitesses longitudinales vers l'avant sont positives, alors que les vitesses en marche arrière prendront des valeurs négatives.

L'appellation « vitesse est substantiellement non nulle », dont VRa est une instance, correspond à des vitesses en dehors de la zone neutre ZN à savoir en équation sur les valeurs absolues |VRa| > |VRb|.

Selon un aspect, le capteur de vitesse est implanté au niveau d'une ou plusieurs roues de la remorque. La remorque avec son système de pilotage est alors complètement autonome du point de vue des signaux et de la commande.

Selon un aspect, le système de pilotage comporte sur la remorque un capteur de vitesse de roue gauche (71) et un capteur de vitesse de roue droite (72). La remorque avec son système de pilotage est alors complètement autonome du point de vue des signaux et de la commande.

La vitesse longitudinale (VR) peut être calculée comme la demi-somme des vitesses gauche et droite, i.e. VR = (VRG + VRD)/2. Cette moyenne est représentative de la vitesse longitudinale réelle dans les courbes.

Selon un autre exemple de réalisation, la vitesse longitudinale peut être choisie comme le maximum des deux vitesses de roue VRG,VRD, soit VR = max (VRG + VRD). Ceci permet de s'affranchir de la situation où une des roues ne tourne pas en raison d'une zone de sol glissant.

Bien entendu, une solution mixte des deux solutions précédentes peut être adoptée.

Selon une variante alternative, le capteur de vitesse est implanté au niveau du tracteur, soit sur une cible à dents tournante avec une roue, soit grâce à un radar. On tire partie du standard IsoBus ou d'un bus J1939 existant pour bénéficier facilement de l'information vitesse d'avance existante sur le tracteur.

La connaissance des deux vitesses de roue, gauche et droite, permet de réaliser un diagnostic de cohérence de l'information mouvement de lacet. En effet, dans un virage, la roue extérieure tourne plus vite que la roue intérieure, et la différence est normalement proportionnelle à un signal correspondant sur le gyromètre. En pratique, si l'équation = (VRG - VRD) / ER (ER étant la voie de l'essieu) n'est substantiellement pas vérifiée pour une durée prédéfinie, cela indique une incohérence ou une erreur, soit concernant la mesure d'une vitesse de roue, soit concernant la mesure du mouvement de lacet.

Selon un aspect, le ou les capteurs de vitesse de roues fournissent un sens de déplacement, i.e. Marche Avant ou Marche Arrière. Il s'avère que la connaissance du sens de déplacement permet un comportement différent du pilotage, utile en l'occurrence car le signe du signal de mouvement de lacet dépend du sens de déplacement de la remorque dans une même courbe.

Selon un aspect, il est prévu une inversion de signe de la sortie pour la marche arrière, i.e. G (dθ/dt,VRa) = - G (dθ/dt, -VRa)

Exprimé autrement, pour une même entrée θ̇ de mouvement de lacet, la sortie de pilotage sur le premier angle α dépend directement du signe, c'est-à-dire du sens de la vitesse de rotation des roues représentative de la vitesse longitudinale du véhicule.

R8 Selon un aspect, le premier vérin est un vérin à double effet, le système de pilotage comportant en outre au moins un premier distributeur interposé entre d'une part une conduite de pression hydraulique et une conduite de retour, et d'autre part les deux orifices d'extrémité du vérin double effet. Ceci procure une commande positive dans les deux sens, avec une symétrie gauche/droite équilibrée pour la commande d'orientation des roues directrices.

Par exemple, le premier vérin peut être du type conventionnel à une seule tige de sortie, mais selon une variante illustrée aux figures, le vérin peut être est du type à deux tiges de sortie diamétralement opposées aux 2 extrémités respectives.

Selon une réalisation, lorsque le distributeur est au repos, les chambres gauches et droites du vérin sont bloquées, ce qui maintient l'orientation des roues fermement dans leur position courante. Mais il peut être prévu en option une vanne de mise en communication fluide des 2 chambres ce qui procure une position flottante à la tige du vérin.

Le premier distributeur est de type à commande proportionnelle, par exemple du type 5/3 ou 4/3. Moyennant quoi un dosage fin du débit d'huile peut être obtenu. Le débit de sortie est ajustable selon la commande en courant des enroulements de bobines.

Selon un aspect, le timon et la portion antérieure de la remorque sont dépourvus d'un quelconque appareillage capteur pour la fonction du ou des essieux à roues directrices. L'accès à la zone qui se trouve entre le tracteur et la remorque n'est pas entravé par un quelconque élément mécanique du type bielle, chainette ou capteur.

Selon un aspect, le capteur de mouvement de lacet est intégré à l'unité de commande électrohydraulique (5). Ceci procure une intégration plus facile, avec un faisceau câblage plus simple et un coût minimisé.

Selon un aspect, la remorque peut comporter en outre au moins un deuxième essieu (E2,E3) à roues directrices, le système de pilotage comprenant une fonction de pilotage de l'angle de direction des roues directrices du deuxième essieu, formant un deuxième angle (α2), ledit deuxième angle étant commandé via un deuxième vérin par l'unité de commande électrohydraulique.

On peut ainsi piloter en même temps le premier essieu directeur et le deuxième essieu directeur avec une loi de commande propre pour chacun.

Il faut remarquer que le système peut être étendu à 3 essieux directeurs ou plus dans la même logique.

Selon un aspect, le système de pilotage comprend en outre un capteur de mouvement de roulis délivrant une mesure instantanée du mouvement de roulis (β̇), la remorque pouvant comporter en outre une suspension hydraulique, avec un vérin gauche (61) et un vérin droite (62) pour chaque essieu, l'unité de commande électrohydraulique pilotant les vérins gauche et droite pour maintenir le châssis sensiblement à l'horizontale, même sur un terrain en dévers.

Selon un aspect, le gyromètre comprend au moins un deuxième axe d'intérêt, ledit deuxième axe d'intérêt étant orienté à la verticale par rapport au châssis de la remorque, formant ainsi le capteur de mouvement de roulis.

On peut utiliser ainsi un seul appareil gyrométrique pour mesurer le mouvement de lacet et le mouvement de roulis ce qui permet d'optimiser l'ensemble de la fonction direction et suspension.

La présente invention vise aussi un ensemble comprenant un tracteur et une remorque telle que définie ci-dessus, dans lequel l'interface entre le tracteur et la remorque comprend un attelage mécanique conventionnel, une fourniture de pression hydraulique et une fourniture d'alimentation électrique, l'interface étant dépourvue de moyen pour mesurer un angle entre un axe longitudinal de la remorque et un axe longitudinal du tracteur.

Selon un aspect, il est prévu dans cet ensemble un pupitre utilisateur agencé dans la cabine du tracteur, pour sélectionner un ou plusieurs modes de fonctionnement, effectuer des commandes manuelles ou spéciales. Il faut remarquer que le pupitre utilisateur n'intervient pas dans la boucle d'asservissement temps réel qui permet de commander l'orientation des roues directrices du premier essieu.

La présente invention vise aussi un procédé pour commander un vérin configuré pour orienter des roues directrices d'un essieu de remorque agricole à roues directrices, avec un angle de direction (α) des roues directrices du premier essieu, appelé premier angle (α),
le procédé comprenant :
- mesurer un mouvement de lacet (θ̇) instantané,
- mesurer une vitesse longitudinale instantanée (VR) de la remorque,
- déterminer une valeur cible (αc) de premier angle à appliquer aux roues directrices, en fonction des mesures instantanées du mouvement de lacet (θ̇) et de la vitesse longitudinale (VR),
- commander le vérin en fonction de cette valeur cible (αc) de premier angle.

Selon un aspect, il est prévu une mesure de la valeur courante de l'angle α, et l'unité de commande électrohydraulique comportant une boucle d'asservissement pour annuler en permanence un écart constaté (α -αc) entre la consigne et le réalisé.

Selon un aspect, le procédé prévoit que le premier angle **α** est piloté selon la fonction G, telle que α = G (dθ/dt,VR), G étant telle que pour toute vitesse donnée VRa substantiellement non nulle, G (dθ/dt,VRa) est une fonction monotone sur toute la plage des mouvements de lacet (θ̇). De plus, la fonction G peut comprendre une zone neutre (ZN) autour de la vitesse nulle, et dans cette zone neutre, la commande est telle que le premier angle α est conservé intact sans changement, ladite de zone neutre étant définie par un seuil bas VRb, et la zone neutre étant comprise entre -VRb et +VRb. De plus, il peut être prévu une inversion de signe de la sortie pour la marche arrière, i.e. G (dθ/dt, VRa) = - G (dθ/dt, -VRa).

Selon un autre point de vue de la présente divulgation, qui pourrait être rendu indépendant de la fonction de direction des essieux à roues directrices, il est proposé un remorque agricole (1) comprenant un châssis (11) et au moins un ou plusieurs essieu(x), la remorque comportant en outre un système de suspension hydraulique reliant le châssis au(x) essieu(x) avec un vérin gauche (61) et un vérin droite (62) pour chaque essieu, la remorque comprenant une fonction de pilotage de l'assiette du châssis (β) par rapport à l'essieu, l'angle d'assiette étant commandé, via les vérins gauche et droite, par une unité de commande électrohydraulique (5) embarquée, le système comprenant en outre un capteur de mouvement de roulis fixé à un élément structurel de la remorque et délivrant une mesure instantanée du mouvement de roulis (β̇), l'unité de commande électrohydraulique pilotant les vérins gauche et droite, qu'en fonction du mouvement de roulis mesuré, pour maintenir le châssis sensiblement à l'horizontale, même sur un terrain en dévers.

Selon un aspect, les deux vérins d'un même essieu sont commandés par deux conduites hydrauliques, une première conduite hydraulique reliée à l'extrémité A du premier vérin de gauche et à l'extrémité B du vérin de droite, alors que la deuxième conduite hydraulique reliée à l'extrémité B du premier vérin de gauche et à l'extrémité A du vérin de droite. Cette commande 'compound' associe une montée à gauche avec une descente à droite et vice-versa, et ceci est directement réalisé dans le circuit hydraulique.

Selon un aspect, il peut être prévu un inclinomètre en complément du gyromètre à axe vertical. Cela peut permettre de recaler la référence du gyromètre à axe vertical dans le cas où la remorque a été garée sur un sol en pente gauche-droite.

L'invention sera davantage détaillée par la description de modes de réalisation non limitatifs, et sur la base des figures annexées illustrant des variantes de l'invention, dans lesquelles :
- [Fig.1] illustre schématiquement un vue en élévation d'un ensemble comprenant un tracteur agricole et une remorque attelés;
- [Fig.2] illustre schématiquement en vue de dessus une remorque double essieu dans laquelle la présente invention est mise en oeuvre;
- [Fig.3] illustre schématiquement en vue arrière un essieu à roue directrices;
- [Fig.4] illustre schématiquement un schéma fonctionnel électrohydraulique du système mis en oeuvre dans la présente invention;
- [Fig.5] illustre schématiquement une loi de commande de l'orientation des roues directrices par rapport à un signal délivré par un capteur de mouvement de lacet;
- [Fig.6] illustre schématiquement un une cartographie de loi de commande en fonction de la vitesse longitudinale et du mouvement de lacet;
- [Fig.7] illustre schématiquement en vue de dessus une remorque à triple essieu dans laquelle la présente invention est mise en oeuvre;
- [Fig.8] illustre un logigramme d'une boucle d'asservissement de pilotage de l'orientation des roues directrices en fonction du mouvement de lacet et de la vitesse longitudinale ;
- [Fig.9] illustre schématiquement en vue arrière partielle une remorque avec un essieu à suspension pilotée;
- [Fig.10] illustre schématiquement un schéma fonctionnel électrohydraulique incluant la fonction de suspension pilotée;

Sur les différentes figures, les mêmes références désignent des éléments identiques ou similaires. Pour des raisons de clarté de l'exposé, certains éléments ne sont pas nécessairement représentés à l'échelle.

### Généralités et système

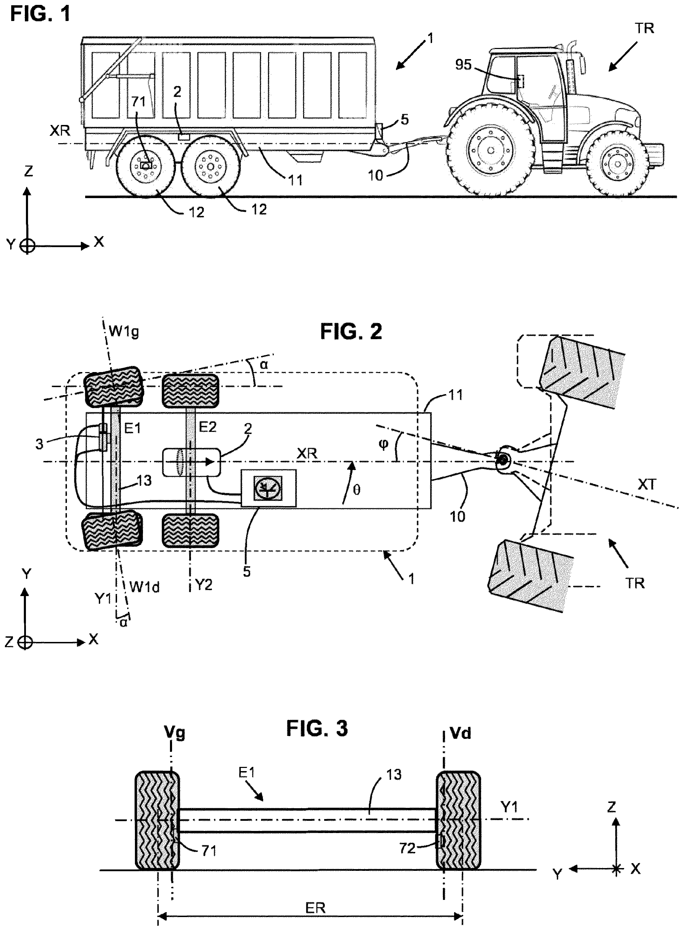

Sur les figure 1 et 2, il est représenté un ensemble formé par un tracteur **TR** et une remorque **1** attelée au tracteur.

Concernant le repérage dans l'espace, dans une configuration simple avec sol plat et marche en ligne droite, la direction **X** correspond à l'axe longitudinal, la direction **Y** correspond à l'axe transversal et la direction **Z** correspond à l'axe vertical.

C'est par rapport à ce repère que l'on définit les mouvements de lacet, roulis et tangage. Le mouvement de lacet est une rotation autour de l'axe vertical tandis que le mouvement de roulis est une rotation autour de l'axe longitudinal X. On ne s'intéressera pas particulièrement au tangage dans le présent document.

L'axe repéré **XR** correspond à l'axe longitudinal de la remorque tandis que **XT** correspond à l'axe longitudinal du tracteur TR. L'orientation de l'axe longitudinal **XR** de la remorque par rapport à un repère terrestre local est noté θ. Dit autrement, θ est le cap de l'axe longitudinal de la remorque dans le repère terrestre local. Pour rappel, les notations « θ̇ » et « **dθ/dt** » sont équivalentes, il s'agit de la dérivée temporelle du cap de la remorque.

La remorque comprend un châssis **11** et un timon **10.**

La remorque **1** illustrée ici comprend deux essieux, **E1** et **E2**, avec le premier essieu **E1** comportant des roues directrice et le deuxième essieu E2 comportant des roues non directrices. Comme il sera vu plus loin, le nombre d'essieux peut être plus important. La remorque porte sur des roues **12**, l'entraxe **ER** entre les plans médians de roues d'un essieu représente la voie de l'essieu (cf Fig 3).

Un essieu à roues directrices étant déjà connu en soi, seuls quelques caractéristiques seront données ci-après, le reste étant supposé connu de la personne du métier.

Chaque essieu comprend un corps principal d'essieu **13**, relié au châssis par un système de suspension et de bielles de reprise d'efforts longitudinaux.

Pour un essieu avec des roues non directrices, comme le deuxième ici, l'axe du corps principal d'essieu **Y2** est confondu avec l'axe de rotation des roues de cet essieu.

Pour un essieu avec roues directrices comme le premier **E1** ici, aux deux extrémités du corps principal d'essieu **13** est prévu une articulation d'axe sensiblement vertical. Cet articulation forme le montage pivotant d'un porte-fusée par rapport au corps principal d'essieu (axes **Vg** et **Vd** sur la figure 3). Sur ce porte fusée est montée à rotation un moyeu de roue. Le moyeu et la fusée ont un axe horizontal orientable (notés respectivement **W1g** et **W1d** pour les roues arrière gauche et arrière droite).

Du point de vue de la rotation des roues sur leur axe, chaque roue est indépendante. Les essieux en question ne sont pas motorisés. En revanche, il peut être prévu une fonction de freinage (non représentée aux figures) au niveau de chacune des roues de l'essieu en question.

Dans l'exemple illustré, les deux roues de l'essieu E1 sont défléchies de leur position en ligne droite de manière identique, autrement dit les deux roues restent parallèles, i.e. W1g = W1d.

Pour faire pivoter les portes fusées par rapport au corps principal d'essieu, chacun des portes fusées comprend un bras de commande d'orientation et il est prévu un actionneur, ancré à une de ses extrémités sur le corps principal d'essieu et relié à l'autre extrémité, par un embiellage plus ou moins complexe, à chacun des deux bras de commande d'orientation des portes fusées.

La géométrie de l'embiellage de commande de direction peut être telle que les angles des axes de roues gauche et droite (W1g et W1d) divergent un peu au fur et à mesure que la déflexion par rapport à la position neutre augmente. Le lecteur peut se référer par exemple aux notions d'épure de direction, comme l'épure de Jeantaud.

Dans le cadre de la présente invention, on supposera que les angles d'axe de roue W1g W1d seront assimilés à un angle général d'orientation appelé premier angle et noté α. La configuration **α** = 0 correspond à la marche en ligne droite. L'angle α peut être positif ou négatif. On peut choisir par convention, comme illustré sur la figure 2, les angles **α** positifs pour une orientation vers la gauche. L'angle **α** représente donc l'angle que font les roues orientées par rapport à la configuration de ligne droite.

En outre, le système comprend un capteur d'angle **74** apte à fournir une mesure de l'angle **α**. En variante, ceci peut être obtenu par un capteur de position de la sortie de tige de vérin 3, information qui est ensuite convertie en angle d'orientation **α** de la roue directrice par un calcul. Le capteur d'angle **74** est par exemple implanté au niveau du porte-fusées d'une des roues de l'essieu en question.

Comme connu en soi, le vérin **3** à double effet présente deux orifices de raccordement hydraulique, à savoir un premier orifice **3A** à une extrémité et un deuxième orifice **3B** à l'autre extrémité.

Concernant la position et l'orientation de l'axe de pivotement du porte-fusée (**Vg**,**Vd**), il peut être prévu en effet de chasse positif qui procure à l'essieu une fonctionnalité de mode suiveur passif en marche avant. Par exemple, l'axe de pivotement du porte-fusée peut être vertical mais décalé un peu vers l'avant rapport à l'axe du corps principal d'essieu. Selon un autre exemple il peut être un peu incliné vers l'arrière par rapport à la verticale par exemple de 5° à 15° vers l'arrière, comme une fourche de vélo.

L'actionneur agissant sur l'angle d'orientation des roues est dans l'exemple illustré un vérin hydraulique à double effet. Toutefois, il n'est pas exclu d'utiliser un vérin électrique pour certains cas particuliers.

La remorque comprend un système de pilotage de l'orientation des roues directrices. En pratique, il est prévu une unité de commande **5.** Cette unité de commande est une unité électrohydraulique. Comme illustré aux figures, l'unité de commande électrohydraulique est implantée sur la remorque.

Cette unité électrohydraulique **5** commande le vérin **3** appelé aussi dans la suite premier vérin, de manière à ce que le premier angle **α** rejoigne une consigne **αc** obtenue par un calcul qui sera détaillé plus loin.

La tige **30** du vérin sélectivement pousse et tire des bielles reliées aux bras de commande des portes fusées afin de modifier l'orientation des roues directrices.

Par ailleurs, la remorque comprend un capteur de vitesse de roue **71** sur la roue gauche et un capteur de vitesse de roue sur la roue droite **72.** De préférence, ces capteurs sont installés sur l'essieu E1 à roues directrices mais ils pourraient être installés sur l'essieu à roues non directrices. De même, dans une version simplifiée, le système pourrait ne comporter qu'un seul capteur de vitesse de roue.

Selon un aspect avantageux, les capteurs de vitesse de roues fournissent un sens de déplacement, i.e. Marche Avant ou Marche Arrière. Il sera vu plus loin l'importance de cette information.

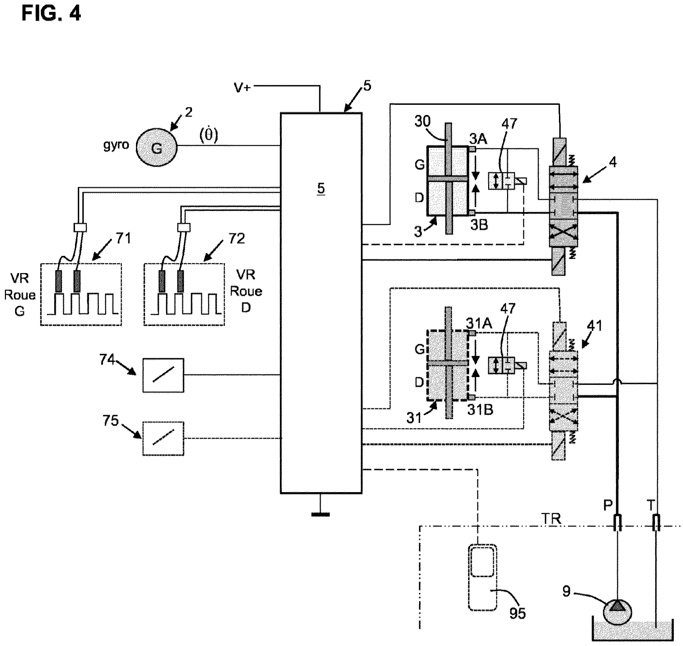

Dans l'exemple, illustré notamment à la figure 4, à cet effet, chacun des capteurs de roues est formé comme un capteur de roue double qui fournit deux signaux en quadrature. Il peut y avoir une cible à dents ou deux cibles à dents et il y a deux capteurs à effet Hall en vis-à-vis des dents qui défilent. L'évolution future pourra aussi être la prise d'info de vitesse directement depuis le tracteur (+également avec l'isobus) (pris en compte ailleurs).

La présente solution prévoit que le système de pilotage comprennent un capteur de mouvement de lacet **2** fixé à un élément structurel de la remorque, e.g. le châssis. Le capteur de mouvement de lacet **2** délivre une mesure instantanée du mouvement de lacet θ̇ à l'unité de commande **5**.

Le capteur de mouvement de lacet **2** est dans l'exemple illustré un gyromètre comprenant au moins un premier axe d'intérêt, ledit premier axe d'intérêt étant orienté à l'horizontale par rapport au châssis de la remorque, formant ainsi le capteur de mouvement de lacet.

Le gyromètre peut être un gyroscope mécanique miniature, ou peut être un composant électronique de type MEMS.

Le gyromètre peut être un organe mesurant la rotation selon les 3 axes de l'espace auquel cas il s'agit d'un gyromètre à 3 axes. Le gyromètre peut être un organe mesurant la rotation selon les 3 axes de l'espace et les accélérations selon les 3 axes de l'espace auquel cas il s'agit d'un accéléromètre/gyromètre dit à 6 axes.

Comme il sera vu plus loin, concernant la fonction suspension, le gyromètre 2 comprend au moins un deuxième axe d'intérêt, ledit deuxième axe d'intérêt étant orienté à la verticale par rapport au châssis de la remorque, formant ainsi le capteur de mouvement de roulis.

Par ailleurs, le tracteur fournit une fonction de pression hydraulique. Pour ceci, il est prévu une conduite hydraulique pressurisé notée **P** et une conduite de retour noté **T** (conduite de retour) dite « fourniture double effet » dans le jargon. Entre la remorque et le tracteur, il est connu en soi de brancher des conduites hydrauliques appartenant au système de la remorque sur des connecteurs hydrauliques appartenant au tracteur et agencés à l'arrière du tracteur. Dans le tracteur, il est prévu par ailleurs une pompe hydraulique repérée **9**. Selon une variante, il est prévu une troisième conduite hydraulique appelée « Load sensing » qui permet de moduler la production de pression hydraulique en fonction du besoin en débit des systèmes présents sur la remorque, notamment le système de pilotage de l'orientation des roues directrices.

Le système de pilotage comporte en outre au moins un distributeur **4** appelé premier distributeur. Ce distributeur est fonctionnellement interposé entre d'une part la conduite de pression hydraulique **P** et la conduite de retour **T**, et d'autre part les deux orifices d'extrémité **3A**,**3B** du vérin double effet.

Le distributeur **4** est de type à commande proportionnelle. Le débit dépend du courant passant dans les bobines, comme connu en soi, donc non détaillé ici. Il est prévu un rappel par organe élastique à la position de repos du milieu. Le tiroir du distributeur est déplacé vers la droite ou la gauche sous l'effet du courant dans les bobines comme connu en soi, laissant passer plus ou moins d'huile dans une direction ou respectivement l'autre direction.

Il est prévu en option une vanne de bypass **47** pour la mise en communication fluide des deux chambres ce qui procure une position flottante au piston et à la tige **30** du vérin.

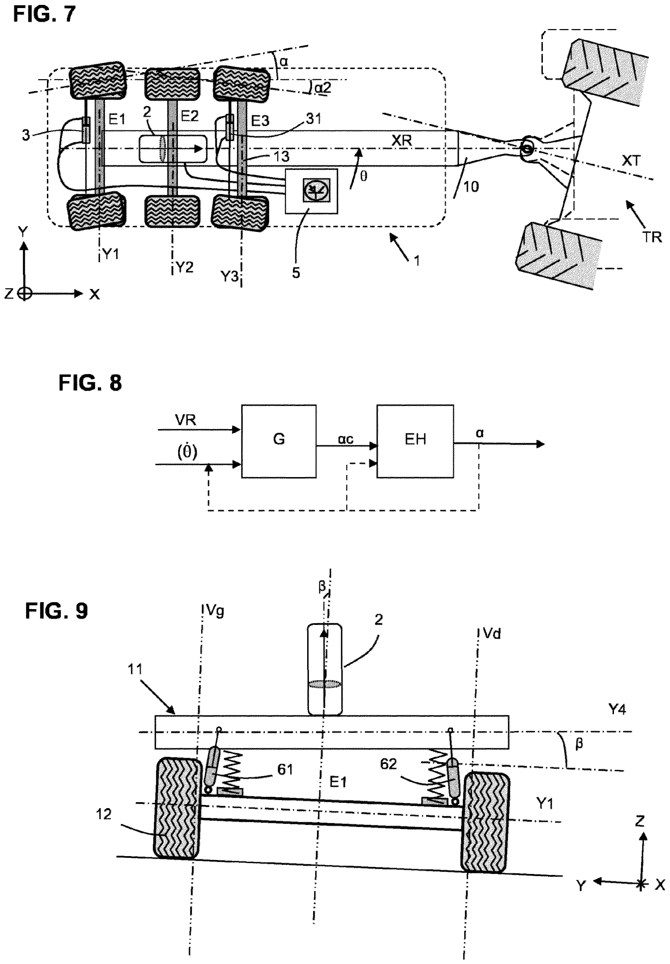

En relation avec le système à triple essieux représenté à la figure 7, la figure 4 fait apparaître les éléments permettant de commander un deuxième essieu à roues directrices **E3**. Sur cet essieu, il est prévu un deuxième vérin **31** pour faire tourner les portes fusées des roues. Ce deuxième vérin est lui aussi à double effet, et il est contrôlé par un second distributeur **41** similaire au premier distributeur. Le deuxième vérin **31** présente un premier orifice **31A** à une extrémité et un deuxième orifice **31B** à l'autre extrémité.

Le deuxième essieu à roues directrices **E3** est identique ou similaire au premier essieu à roues directrices, donc non décrit à nouveau ici.

L'angle que fait l'orientation des roues du deuxième essieu à roues directrices **E3** par rapport à la ligne droite est noté **α2** aussi appelé deuxième angle.

Un capteur d'angle **75** est par exemple implanté au niveau du porte-fusée d'une des roues de l'essieu E3 en question. Le capteur d'angle **75** est apte à fournir une mesure de l'angle **α2**.

Le deuxième angle **α2** est commandé via le deuxième vérin 31 par l'unité de commande électrohydraulique 5.

Pour certains besoins liés à la fonction de l'essieu à roues directrices, il est prévu un pupitre utilisateur **95** agencé dans la cabine du tracteur. Le pupitre utilisateur **95** est utilisé par un opérateur du tracteur pour sélectionner un ou plusieurs modes de fonctionnement du système à essieux directeurs, en particulier pour effectuer des commandes manuelles ou spéciales.

### Fonctionnement - Direction.

L'unité de commande **5** est chargée de déterminer en permanence un angle d'orientation cible **αc** pour le premier essieu à roues directrices et le cas échéant un deuxième angle d'orientation **α2c** pour le deuxième essieu à roues directrices.

Tout d'abord, l'unité de commande **5** détermine la vitesse longitudinale **VR**. S'il y a un seul capteur, c'est l'information directe de ce capteur qui est considérée comme la vitesse longitudinale **VR.**

S'il y a 2 capteurs, gauche et droite, la vitesse longitudinale VR est par exemple calculée comme la demi-somme des vitesses gauche et droite, i.e. VR = (VRG + VRD)/2. Selon une variante, la vitesse longitudinale peut être choisie comme le maximum des deux vitesses de roue VRG,VRD, soit VR = max (VRG + VRD).

L'unité de commande **5** détermine, en fonction de l'information remontée par le capteur d'angle **74**, la valeur courante de l'angle **α**.

L'unité de commande **5** acquiert en provenance du capteur du mouvement de lacet une mesure du mouvement de lacet (θ̇).

En fonction du mouvement de lacet (θ̇) et de la vitesse longitudinale VR l'unité de commande 5 calcule une valeur cible pour le premier angle, de manière à ce que le premier angle **α** soit rendu dépendant au moins du mouvement de lacet et de la vitesse longitudinale.

Plus précisément, le premier angle cible **αc** est calculé selon la fonction **G**, telle que **αc** = **G** (dθ/dt,VR), G étant telle que pour toute vitesse donnée **VRa** substantiellement non nulle. Dans un exemple, la fonction **G (dθ/dt**, **VRa)** est une fonction monotone sur toute la plage des mouvements de lacet.

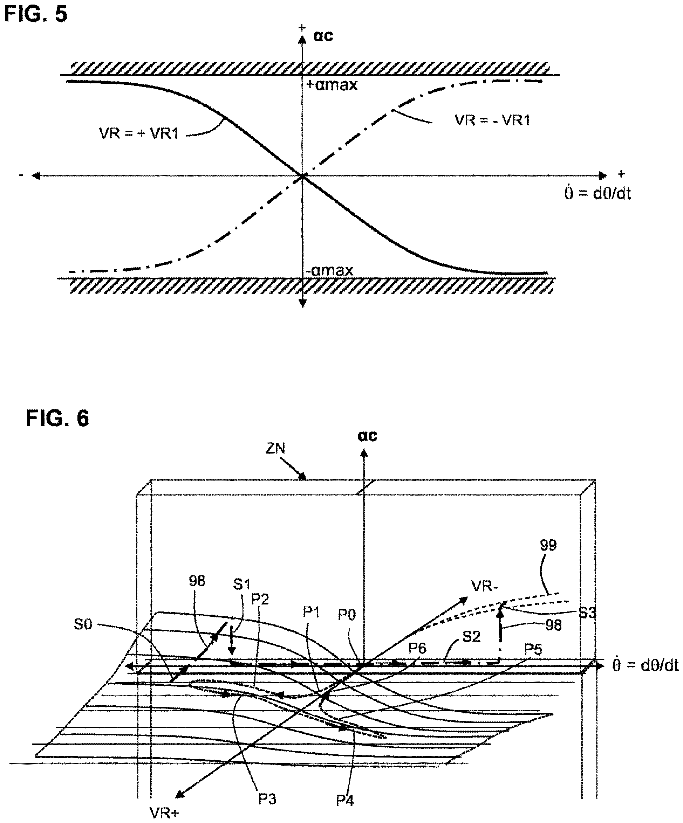

On peut choisir **G (dθ/dt, VRa)** comme fonction linéaire et obtenir ainsi une commande substantiellement proportionnelle. Mais dans l'exemple illustré à la figure 5, la fonction G n'est pas linéaire, la pente diminue au fur et à mesure qu'on s'écarte du point 0,0. Sur l'axe des ordonnées, **α**max et - **α**max représentent les butées angulaires d'orientation maximum des roues de l'essieu.

La courbe en trait plein est donnée pour une vitesse en marche avant établie à VRa=VR1, et la courbe en trait mixte est donnée pour une vitesse en marche arrière établie à VRa=-VR1.

On remarque une inversion de signe de la sortie pour la marche arrière, i.e. G (dθ/dt,VRa) = - G (dθ/dt, -VRa). Ceci incarne la prise en compte de l'information délivrée dans le gyromètre, dont le signe change sur une courbe donnée selon que la remorque avance ou recule, il faut donc aussi inverser la sortie (ou une solution équivalente) pour que les roues restent braquées de la même façon entre une manoeuvre vers l'avant et une manoeuvre vers l'arrière.

La figure 6 présente une cartographie en 3 dimensions avec deux axes des abscisses, θ̇ = dθ/dt et VR, et en ordonnées le premier angle cible **αc**.

Il est illustré un parcours type de la position **P0** jusqu'à la position **P5** et retour à la position **P0** pour une évolution uniquement en marche avant avec un premier virage (**P2**,**P3**) et un deuxième virage (P4) dans le sens opposé.

On remarque que la fonction **G** comprend une zone neutre **ZN** autour de la vitesse nulle, et dans cette zone neutre, la commande est telle que le premier angle α est conservé intact sans changement, ladite de zone neutre étant définie par un seuil bas VRb, et la zone neutre étant comprise entre -VRb et +VRb. Dans la formule **G (dθ/dt, VRa)** VRa correspond à une vitesse en dehors de la zone neutre ZN à savoir en équation sur les valeurs absolues |VRa| > |VRb|.

Sur la figure 6, le domaine des vitesses négatives (marche arrière) n'a été représenté que partiellement (lignes pointillés **99**), il faut considérer l'inversion déjà mentionnée et le fait déjà mentionné que lorsqu'on passe de marche avant en marche arrière le signe de **dθ/dt** change.

La courbe en traits mixtes **98** illustre un parcours **(S0-S1-S2-S3)** en courbe où la vitesse se réduit jusqu'à 0, puis on enclenche une marche arrière toujours sur la même courbe (on change de quartier dans la cartographie en traversant la zone neutre).

Pour rappel, dans la zone neutre **ZN**, il n'y a aucune commande de changement d'angle **α**.

Concernant le deuxième essieu à roues directrices, la même logique générale est appliquée avec des paramètres spécifiques et l'angle **α2**.

On note sur la figure 7 que le signe de **α2** est opposé au signe de **α**.

La figure 8 illustre sous forme de schéma bloc la boucle d'asservissement, avec tout d'abord le calcul de l'angle cible et ensuite le pilotage du vérin de manière à annuler une erreur **αc - α**.

### Fonctionnement - Suspension.

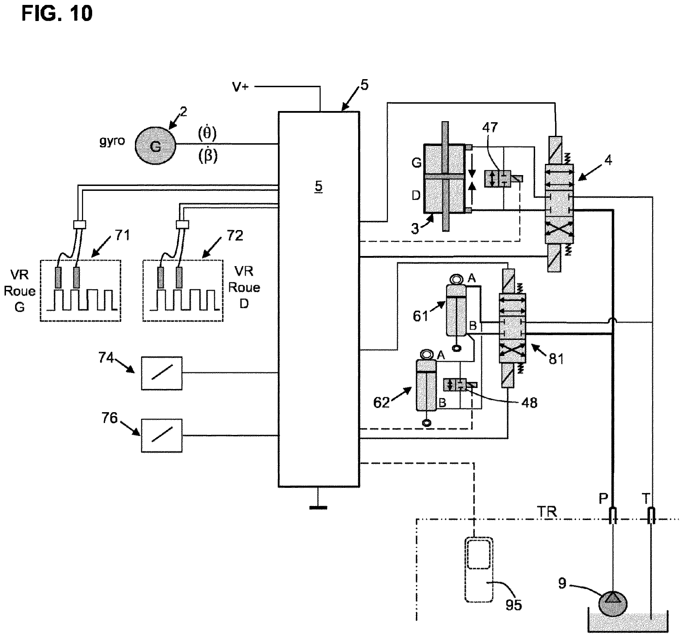

En se tournant vers les figures 9 et 10, la remorque peut comporter au moins un essieu à suspension hydraulique (avec ou sans roues directrices). Le système de pilotage comprend alors une fonction de pilotage autonome de l'assiette.

Le système de pilotage comprend en outre un capteur de mouvement de roulis délivrant une mesure instantanée du mouvement de roulis (β̇). Dans cette configuration, le gyromètre comprend un deuxième axe d'intérêt, ledit deuxième axe d'intérêt étant orienté à la verticale par rapport au châssis de la remorque, formant ainsi le capteur de mouvement de roulis

Le système de pilotage comprend un vérin gauche **61** et un vérin droite **62** pour chaque essieu concerné. L'unité de commande électrohydraulique 5 pilote les vérins gauche et droite pour maintenir le châssis 11 sensiblement à l'horizontale, même sur un terrain en dévers.

Comme illustré sur la figure 9, l'angle entre la direction transverse **Y4** du châssis et la direction **Y1** du corps principal d'essieu est noté **β**.

Cette fonction de correction d'assiette (et de dévers) permet de garantir une position horizontale de la remorque et notamment de sa benne pour les situations de récolte ou la benne reçoit un flux de matière en provenance d'une autre machine récoltante.

Cette fonction est aussi utile dans les virages sur la route notamment le passage de ronds-points, où il est préférable d'éviter que la remorque ne se penche vers l'extérieur.

Le vérin gauche **61** et le vérin droite **62** sont raccordés à un distributeur **81** du type de ceux déjà décrits pour le pilotage de direction.

La aussi, il est prévu une vanne de bypass repérée **48** pour laisser flottante la suspension.

On remarque que les deux vérins d'un même essieu sont commandés par deux conduites hydrauliques, une première conduite hydraulique reliée à l'extrémité A du premier vérin de gauche et à l'extrémité B du vérin de droite, alors que la deuxième conduite hydraulique reliée à l'extrémité B du premier vérin de gauche et à l'extrémité A du vérin de droite.

### Divers

L'unité de commande 5 est alimentée électriquement depuis le tracteur par une tension positive **V+** et un point de masse.

S'agissant de la position du gyromètre **2** par rapport à la structure de la remorque, le gyromètre peut être positionné sur le châssis près du centre de gravité général de la remorque comme illustré à la figure 1. Selon un autre mode de réalisation, le gyromètre et situé à l'avant de la remorque à proximité du boîtier qui contient l'unité de commande **5**.

Dans les exemples présentés ci-dessus, la pression hydraulique est fournie par une pompe hydraulique existante sur le tracteur. Il faut toutefois remarquer qu'il est aussi possible d'imaginer un groupe hydraulique à bord de la remorque avec une fourniture de puissance électrique depuis le tracteur (la remorque est alors autonome du point de vue hydraulique).

Dans les configurations à deux essieux à roues directrices **E1**, **E3**, il peut être pertinent de laisser l'essieu le plus antérieur ici le **E3** dans un mode suiveur, c'est-à-dire piloter le vérin à double effet **31** en mode flottant comme mentionné plus haut

Il faut remarquer que pour certaines manoeuvres à basses vitesses, les angles **α** et le cas échéant **α2** peuvent être pilotés pour que la remorque se déplace en crabe ; il s'agit d'un mode spécial sélectionnez sur le pupitre utilisateur **95**.

## Revendications

1. Remorque agricole (1) comprenant un châssis (11) et au moins deux essieux (E1,E2), avec au moins un premier essieu (E1) à roues directrices, la remorque comprenant un système de pilotage d'un angle de direction des roues directrices du premier essieu, appelé premier angle α, le premier angle α étant commandé, via un premier vérin (3), par une unité de commande (5) embarquée, le système de pilotage prévoyant la fourniture d'une vitesse longitudinale (VR) de la remorque, en provenance d'au moins un capteur de vitesse et à destination de l'unité de commande (5),
**caractérisée en ce que** le système de pilotage comprend un capteur de mouvement de lacet (2) fixé à un élément structurel de la remorque et délivrant une mesure instantanée du mouvement de lacet (θ̇) à l'unité de commande, le premier angle α étant rendu dépendant au moins du mouvement de lacet (θ̇) et de la vitesse longitudinale (VR).

2. Remorque selon la revendication 1, dans lequel le capteur de mouvement de lacet est un gyromètre comprenant au moins un premier axe d'intérêt, ledit premier axe d'intérêt étant orienté à l'horizontale par rapport au châssis de la remorque, formant ainsi le capteur de mouvement de lacet.

3. Remorque l'une quelconque des revendications 1 à 2, dans lequel le premier angle **α** est piloté selon la fonction **G**, telle que **α** = G (dθ/dt,VR), G étant telle que pour toute vitesse donnée **VRa** substantiellement non nulle, **G (dθ/dt,VRa)** est une fonction monotone sur toute la plage des mouvements de lacet (θ̇).

4. Remorque selon la revendication 3, dans lequel la fonction **G** comprend une zone neutre (ZN) autour de la vitesse nulle, et dans cette zone neutre, la commande est telle que le premier angle **α** est conservé intact sans changement, ladite de zone neutre étant définie par un seuil bas VRb, et la zone neutre étant comprise entre -VRb et +VRb.

5. Remorque selon l'une quelconque des revendications 1 à 4, dans lequel le capteur de vitesse est implanté au niveau d'une ou plusieurs roues de la remorque, et de préférence le système de pilotage comporte sur la remorque un capteur de vitesse de roue gauche (71) et un capteur de vitesse de roue droite (72).

6. Remorque selon l'une quelconque des revendications 1 à 5, dans lequel les capteurs de vitesse de roues fournissent un sens de déplacement, i.e. Marche Avant ou Marche Arrière.

7. Remorque selon les revendications 4 et 6, **caractérisée en ce qu'**il est prévu une inversion de signe de la sortie pour la marche arrière, i.e. G (dθ/dt,VRa) = - G (dθ/dt, -VRa).

8. Remorque selon l'une quelconque des revendications 1 à 7, dans lequel le premier vérin (3) est un vérin à double effet, le système de pilotage comportant en outre au moins un premier distributeur (4), interposé entre d'une part une conduite de pression hydraulique et une conduite de retour, et d'autre part les deux orifices d'extrémité du vérin double effet.

9. Remorque selon l'une quelconque des revendications 1 à 9, comportant en outre au moins un deuxième essieu (E2,E3) à roues directrices, le système de pilotage comprenant une fonction de pilotage de l'angle de direction (α2) des roues directrices du deuxième essieu, formant un deuxième angle (α2), ledit deuxième angle étant commandé via un deuxième vérin par l'unité de commande électrohydraulique (5).

10. Remorque selon l'une quelconque des revendications 1 à 10, dans lequel le système de pilotage comprend en outre un capteur de mouvement de roulis délivrant une mesure instantanée du mouvement de roulis (β̇), la remorque comportant en outre une suspension hydraulique, avec un vérin gauche (61) et un vérin droite (62) pour chaque essieu, l'unité de commande électrohydraulique pilotant les vérins gauche et droite pour maintenir le châssis sensiblement à l'horizontale, même sur un terrain en dévers.

11. Remorque selon les revendications 2 et 11, dans lequel le gyromètre comprend au moins un deuxième axe d'intérêt, ledit deuxième axe d'intérêt étant orienté à la verticale par rapport au châssis de la remorque, formant ainsi le capteur de mouvement de roulis.

12. Ensemble comprenant un tracteur et une remorque selon l'une quelconque des revendications 1 à 12, dans lequel l'interface entre le tracteur et la remorque comprend un attelage mécanique conventionnel, une fourniture de pression hydraulique et une fourniture d'alimentation électrique, l'interface étant dépourvue de moyen pour mesurer un angle entre un axe longitudinal de la remorque et un axe longitudinal du tracteur.

13. Ensemble selon la revendication 13, dans lequel il est prévu un pupitre utilisateur (95) agencé dans la cabine du tracteur, pour sélectionner un ou plusieurs modes de fonctionnement, effectuer des commandes manuelles ou spéciales.

14. Procédé pour commander un premier vérin configuré pour orienter des roues directrices d'un essieu de remorque agricole à roues directrices, avec un angle de direction (α) des roues directrices du premier essieu appelé premier angle, le procédé comprenant :
- mesurer un du mouvement de lacet (θ̇) instantané,
- acquérir une vitesse longitudinale instantanée (VR) de la remorque,
- déterminer une valeur cible (αc) de premier angle à appliquer aux roues directrices, en fonction des mesures instantanées du mouvement de lacet (θ̇) et de la vitesse longitudinale (VR),
- commander le premier vérin en fonction de cette valeur cible (αc) de premier angle.

15. Procédé selon la revendication 13, dans lequel le premier angle α est piloté selon la fonction G, telle que α = G (dθ/dt,VR), G étant telle que pour toute vitesse donnée VRa substantiellement non nulle, G (dθ/dt, VRa) est une fonction monotone sur toute la plage des mouvements de lacet (θ̇), dans lequel la fonction G comprend une zone neutre (ZN) autour de la vitesse nulle, et dans cette zone neutre, la commande est telle que le premier angle α est conservé intact sans changement, ladite de zone neutre étant définie par un seuil bas VRb, et la zone neutre étant comprise entre -VRb et +VRb, et dans lequel il est prévu une inversion de signe de la sortie pour la marche arrière, i.e. G (dθ/dt, VRa) = - G (dθ/dt, -VRa).
